# EUROPEAN PATENT APPLICATION

(11) **EP 4 773 373 A1**
(43) Date of publication of application: **08.07.2026**
(21) Application number: 24896134.4
(22) Date of filing: 29.10.2024
(51) Int. Cl.: H01M 50/244, H01M 50/24, H01M 50/262, H01M 50/249

(54) **BATTERY CASE, BATTERY, AND ELECTRIC DEVICE**

(30) Priority: 30.11.2023 CN 202323280853 U
(71) Applicant: Contemporary Amperex Technology Co., Limited, Ningde, Fujian 352100 (CN)
(72) Inventor: HUANG, Peiyao, Ningde, Fujian 352100 (CN); SHI, Weigang, Ningde, Fujian 352100 (CN); WANG, Zhi, Ningde, Fujian 352100 (CN); LUO, Wenchao, Ningde, Fujian 352100 (CN)
(74) Representative: Kraus & Lederer PartGmbB
(86) International application number: PCT/CN2024/128112
(87) International publication number: WO 2025/113043

(57) **Abstract**

A battery case (100), a battery (200), and an electric device (1000). The battery case (100) comprises a first case portion (1), a second case portion (2), a first sealing member (3), and first fastening members (4); the first case portion (1) and the second case portion (2) are sealedly connected to form a sealed cavity (101), the first case portion (1) comprises a first sealing surface (10), the second case portion (2) comprises a second sealing surface (20), and the first sealing surface (10) and the second sealing surface (20) match to each other to form a sealing interface; the first sealing member (3) is arranged at the sealing interface to seal the first sealing surface (10) and the second sealing surface (20); the first fastening members (4) pass through the first sealing surface (10) and the second sealing surface (20) to connect the first sealing surface (10) and the second sealing surface (20) to clamp the first sealing member (3), so that the first sealing surface (10) and the second sealing surface (20) are sealedly connected; the first fastening members (4) are completely located on the outer side of the sealed cavity (101), and in the direction of extension of the sealing interface, the first fastening members (4) are located on the side of the first sealing member (3) away from the sealed cavity (101).

## Description

### CROSS-REFERENCE TO RELATED APPLICATION

The present application is presented based on Chinese Patent Application No. 202323280853.9 filed on November 30, 2023, and claims the priority to the Chinese Patent Application described above, the content of which is incorporated herein by reference in its entirety.

### TECHNICAL FIELD

The present application relates to the technical field of batteries, and in particular, to a battery case, a battery, and an electric device.

### BACKGROUND

In recent years, new energy vehicles have developed by leaps and bounds. In the field of electric vehicles, batteries, as the power source of electric vehicles, play an irreplaceable and important role, while the sealing reliability of existing battery cases needs to be improved.

### SUMMARY

The present application provides a battery case, a battery, and an electric device, which are conducive to improving the sealing reliability of battery cases.

In a first aspect, the embodiments of the present application provide a battery case. The battery case includes: a first case and a second case, connected in a sealed manner to form a sealed cavity, where the first case includes a first sealing surface, and the second case includes a second sealing surface, the first sealing surface cooperating with the second sealing surface to form a sealing interface; a first sealing member, disposed at the sealing interface to seal the first sealing surface and the second sealing surface; and first fasteners, where the first fasteners pass through the first sealing surface and the second sealing surface to connect the first sealing surface and the second sealing surface to clamp the first sealing member, such that the first sealing surface and the second sealing surface are connected in a sealed manner. The first fasteners are completely located outside the sealed cavity, and in an extension direction of the sealing interface, the first fasteners are located on a side, distal to the sealed cavity, of the first sealing member.

In the above technical solution, the first fastener and the first sealing member are arranged in a staggered manner, and the first fastener provides a fastening connection effect, such that the first sealing surface and the second sealing surface clamp the first sealing member to achieve a sealing fit. The first sealing member is isolated between the sealed cavity and the first fastener, thereby alleviating the problem of communication between the sealed cavity and the outside through a gap where the first fastener passes through, which is conducive to improving the sealing performance of the battery case. When one first fastener or a small number of first fasteners fail, the stable connection and sealing of the battery case can still be maintained, thereby reducing the risk of sealing failure of the battery case after the first fastener fails, improving the sealing reliability of the battery case, and improving the operation safety of a battery using the battery case of the present application.

In some embodiments, the first case is provided with a first matching portion and a first connecting portion adjacent to each other, and the second case is provided with a second matching portion and a second connecting portion adjacent to each other; the first sealing member is located between the first matching portion and the second matching portion, and the first fasteners are connected to the first connecting portion and the second connecting portion, such that the first matching portion and the second matching portion clamp the first sealing member.

In the above technical solution, the first matching portion and the second matching portion are configured for sealing fit, the first fastener connects the first connecting portion and the second connecting portion, the first matching portion, the second matching portion, the first connecting portion, and the second connecting portion have clearly defined functions and clear structures, which is conducive to saving the manufacturing cost of the battery case.

In some embodiments, the second connecting portion is provided with a plurality of connecting holes spaced apart from each other, and the connecting holes are provided for the first fasteners to pass through; the second connecting portion is further provided with hoisting holes, and at least one of the hoisting holes is located between two adjacent connecting holes; the first connecting portion is provided with clearance notches, and a number and positions of the clearance notches correspond to a number and positions of the hoisting holes.

In the above technical solution, the hoisting holes are provided on the second connecting portion, and the hoisting holes are separated from the first connecting portion and the second connecting portion that are configured for clamping the first sealing member for sealing. This can reduce the risk of sealing failure of the battery case caused by deformation of the hoisting holes under force during the hoisting process of the battery case, thereby improving the sealing reliability of the battery case, and improving the operation safety of a battery using the battery case of the present application.

In some embodiments, the second case includes two second connecting portions arranged opposite to each other in a first direction and a bearing plate, and the second connecting portions are configured as side surfaces, perpendicular to the first direction, of the bearing plate.

In the above technical solution, the second connecting portion is configured on the side surface of the bearing plate, which facilitates the connection between the second connecting portion and the first connecting portion, thereby improving the assembly efficiency of the battery case.

In some embodiments, the second case further includes two extension plates, the two extension plates are arranged opposite to each other in the first direction and are both connected to the bearing plate, and two second matching portions are provided and are respectively located on sides, facing away from the first matching portion, of the two extension plates.

In the above technical solution, the second matching portion is disposed adjacent to the second connecting portion, such that the clamping effect of the first fastener on the first matching portion and the second matching portion can be improved, which is conducive to improving the sealing performance of the battery case.

In some embodiments, the first fastener further passes through the extension plate to connect the first connecting portion, the second connecting portion, and the extension plate.

In the above technical solution, the extension plate is fixedly connected to the bearing plate by using the first fastener for connecting the bearing plate and the first connecting portion, such that the assembly process of separately connecting the extension plate and the first connecting portion to the bearing plate can be reduced, thereby lowering the manufacturing cost of the battery case and improving the assembly efficiency of the battery case.

In some embodiments, the second case further includes two extension walls arranged opposite to each other in a second direction, the second direction intersecting with the first direction, and the first case includes a top plate arranged opposite to the bearing plate; a surface, facing away from the bearing plate, of the extension wall is a third sealing surface, and a surface, facing the extension wall, of the top plate is a fourth sealing surface; a second sealing member is clamped between the third sealing surface and the fourth sealing surface.

In the above technical solution, the sealing fit between the first sealing surface and the second sealing surface, and the sealing fit between the third sealing surface and the fourth sealing surface, completely surround the sealed cavity, such that the sealing reliability of the sealed cavity can be improved.

In some embodiments, the battery case further includes a second fastener; the second fastener passes through the fourth sealing surface, the second sealing member, and the third sealing surface in sequence and is locked to the extension wall, and the second fastener is completely located outside the sealed cavity.

In the above technical solution, the second fastener passes through the second sealing member to fixedly connect the fourth sealing member and the third sealing member, the fourth sealing surface and the third sealing surface are simultaneously brought into a sealing fit, which can save the arrangement area that would otherwise be required for arranging the second sealing member and the second fastener in a staggered manner, reduce the space occupied in the battery case, and is conducive to the miniaturization design of the battery case. In addition, the second fastener is completely located outside the sealed cavity, and the sealed cavity is not connected to the outside of the battery case through the penetration of the second fastener, which is conducive to improving the sealing performance of the battery case.

In some embodiments, the first sealing member and the second sealing member are integrally formed into a ring shape.

In the above technical solution, the first sealing member and the second sealing member have strong integrity, which can alleviate the problem that the sealed cavity communicates with the outside through the gap at the connection end of the first sealing member and the second sealing member, and is conducive to improving the sealing performance of the battery case.

In some embodiments, the extension wall is connected to the bearing plate by full welding.

In the above technical solution, the extension wall is connected to the bearing plate by full welding, which can improve the structural strength of the second case, and improve the operation safety of the battery case.

In a second aspect, the embodiments of the present application provide a battery. The battery includes a battery cell and the above battery case, and the battery cell is disposed in the sealed cavity.

In the above technical solution, since the above battery case is adopted for the battery, the sealing reliability of the battery can be improved, thereby improving the operation reliability and use safety of the battery.

In a third aspect, the embodiments of the present application provide an electric device. The electric device includes the above battery, and the battery is configured to provide electric energy.

In the above technical solution, since the above battery is adopted for the electric device, the use reliability and safety of the electric device can be effectively improved.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic structural diagram of a vehicle according to some embodiments of the present application;
FIG. 2 is an exploded view of a battery according to some embodiments of the present application;
FIG. 3 is a schematic structural diagram of a battery case according to some embodiments of the present application;
FIG. 4 is an exploded view of a battery case according to some embodiments of the present application;
FIG. 5 is a front view of a battery case according to some embodiments of the present application;
FIG. 6 is a cross-sectional view taken along line A-A in FIG. 5;
FIG. 7 is an enlarged view of the circled portion B in FIG. 6;
FIG. 8 is an enlarged view of the circled portion C in FIG. 3;
FIG. 9 is an exploded view of a partial structure of a second case according to some embodiments of the present application; and
FIG. 10 is an enlarged view of the circled portion D in FIG. 9.

### Reference numerals:

electric device 1000, controller 300, motor 400,
battery 200, battery case 100, sealed cavity 101, battery cell 110,
first direction X, second direction Y, third direction Z,
first case 1, first sealing surface 10, first matching portion 1a, first connecting portion 1b, clearance notch 1b1, top plate 11, fourth sealing surface 111, first plate portion 112, second plate portion 113,
second case 2, second sealing surface 20, second matching portion 2a, second connecting portion 2b, connecting hole 2b1, hoisting hole 2b2, bearing plate 21, cavity 211, extension plate 22, extension wall 23, third sealing surface 231;
first sealing member 3,
first fastener 4, rivet nut 40,
second fastener 5, second sealing member 6.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings are only exemplary and should not constitute any limitation on the present application. Orientations or positional relationships indicated by terms such as "up", "down", "front", "rear", "axial", and "radial" are based on orientations or positional relationships shown in the drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including a plurality of battery cells to provide higher voltage and capacity. For example, the battery mentioned in the present application may be a battery module, a battery pack, or the like. A battery module generally includes a plurality of battery cells. The battery generally includes a case for encapsulating a plurality of battery cells or a plurality of battery modules, and the case can prevent liquid or other foreign matters from affecting the charging or discharging of the battery cells. Certainly, the battery may alternatively not include a case.

Illustratively, a battery cell may typically include a housing, a battery cell assembly, and an electrolyte. The housing is configured to accommodate the battery cell assembly and the electrolyte, and at least one positive electrode post terminal and at least one negative electrode post terminal are disposed on the housing. The battery cell assembly includes one or a plurality of electrode assemblies, and the electrode assembly is formed by stacking or winding a positive electrode plate, a negative electrode plate, and a separator.

The positive electrode plate may typically include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab, and a plurality of positive electrode tabs are stacked together and electrically connected to the positive electrode post terminal. Illustratively, the plurality of positive electrode tabs stacked together may be directly welded to the positive electrode post terminal to form an electrical connection. Alternatively, the battery cell assembly may further include a positive electrode adapting piece, the plurality of positive electrode tabs stacked together are welded to one end of the positive electrode adapting piece, and the other end of the positive electrode adapting piece is welded to the positive electrode post terminal to form an electrical connection between the positive electrode tabs and the positive electrode post terminal.

The negative electrode plate may typically include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab, and a plurality of negative electrode tabs are stacked together and electrically connected to the negative electrode post terminal. Illustratively, the plurality of negative electrode tabs stacked together may be directly welded to the negative electrode post terminal to form an electrical connection. Alternatively, the battery cell assembly may further include a negative electrode adapting piece, the plurality of negative electrode tabs stacked together are welded to one end of the negative electrode adapting piece, and the other end of the negative electrode adapting piece is welded to the negative electrode post terminal to form an electrical connection between the negative electrode tabs and the negative electrode post terminal. The material of the separator is not limited, and may be, e.g., polypropylene or polyethylene.

In recent years, new energy vehicles have developed by leaps and bounds. In the field of electric vehicles, batteries, as the power source of electric vehicles, play an irreplaceable and important role. A battery case plays a role in isolating and protecting internal battery units, and the sealing reliability of the battery case directly affects the operation safety of the battery.

In the related art, the battery case is formed by combining an upper cover and a lower shell, and the upper cover and the lower shell are connected by a sealing member at a joint between the upper cover and the lower shell to seal the interior of the battery case. Moreover, the battery case is fastened and connected by fasteners that directly pass through the upper cover, the sealing member, and the lower shell, and the fasteners not only fixedly connect the upper cover and the lower cover, but are also configured to press the sealing member against the upper cover and the lower shell to seal the battery case. However, in such a manner, when one of the fasteners fails, the risk of failure of the sealing member near the failed fastener is greatly increased, which is likely to cause sealing failure of the battery case.

Based on the above considerations, in order to further improve the sealing reliability of battery cases, the embodiments of the present application provide a battery case. The battery case includes: a first case, a second case, a first sealing member, and first fasteners. The first case and the second case are connected in a sealed manner to form a sealed cavity, the first case includes a first sealing surface, the second case includes a second sealing surface, the first sealing surface and the second sealing surface cooperate with each other to form a sealing interface, and the first sealing member is arranged at the sealing interface to seal the first sealing surface and the second sealing surface. The first fasteners pass through the first sealing surface and the second sealing surface to connect the first sealing surface and the second sealing surface to clamp the first sealing member, such that the first sealing surface and the second sealing surface are connected in a sealed manner. The first fasteners are completely located outside the sealed cavity, and in an extension direction of the sealing interface, the first fasteners are located on a side, distal to the sealed cavity, of the first sealing member.

In the above technical solution, the first fastener and the first sealing member are arranged in a staggered manner, and the first fastener provides a fastening connection effect, such that the first sealing surface and the second sealing surface clamp the first sealing member to achieve a sealing fit. The first sealing member is isolated between the sealed cavity and the first fastener, thereby alleviating the problem of communication between the sealed cavity and the outside through a gap where the first fastener passes through, which is conducive to improving the sealing performance of the battery case. When one first fastener or a small number of first fasteners fail, the stable connection and sealing of the battery case can still be maintained, thereby reducing the risk of sealing failure of the battery case after the first fastener fails, improving the sealing reliability of the battery case, and improving the operation safety of a battery using the battery case of the present application.

The embodiments of the present application provide an electric device using the battery disclosed herein as a power source. The electric device may be, but is not limited to, a mobile phone, a tablet, a laptop computer, an electric toy, an electric tool, an electric bike, an electric vehicle, a ship, a spacecraft, and the like. The electric toy may include a stationary or mobile electric toy, such as a game console, an electric car toy, an electric ship toy, and an electric aircraft toy; the spacecraft may include an airplane, a rocket, a space shuttle, a spaceship, and the like; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation in the following embodiments, the structures of the electric device 1000, the battery 200, and the battery case 100 of the present application are described in detail by taking the electric device 1000 as a vehicle as an example.

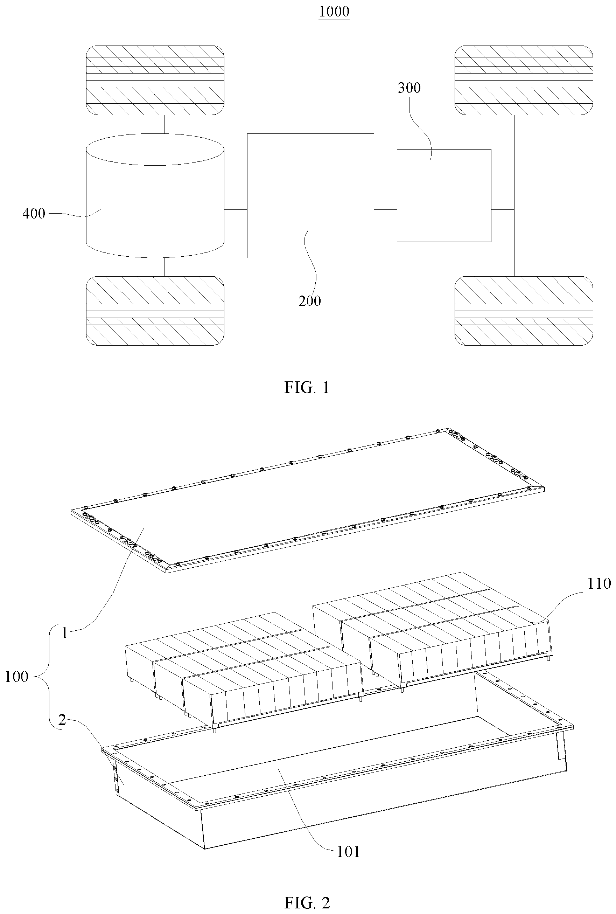

Referring to FIG. 1, FIG. 1 is a schematic structural diagram of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 200 is arranged in the vehicle, and the battery 200 may be arranged at the bottom, head, or tail of the vehicle. The battery 200 may be configured to supply power to the vehicle. For example, the battery 200 may serve as an operation power source for the vehicle. The vehicle may further include a controller 300 and a motor 400. The controller 300 is configured to control the battery 200 to supply power to the motor 400, e.g., for operation power needed by the vehicle for start-up, navigation, and driving. In some embodiments of the present application, the battery 200 may not only serve as the operation power source for the vehicle, but also as a driving power source for the vehicle to, replacing or partially replacing fuel or natural gas, provide driving power for the vehicle.

Referring to FIG. 2, FIG. 2 is an exploded view of a structure of battery cells 110 used in a battery 200 according to some embodiments of the present application. The battery 200 includes a battery case 100 and a plurality of battery cells 110, and the battery cells 110 are accommodated in the battery case 100. The battery case 100 is configured to provide an assembly space for the battery cells 110, and the battery case 100 may be in various structures.

In some embodiments, the battery case 100 may include a first case 11 and a second case 12. The first case 11 and the second case 12 are lidded with each other. The first case 11 and the second case 12 jointly define an accommodating space 110 for accommodating the battery cells 110. The first case 11 may be of a hollow structure with one end open, the second case 12 may be of a plate-shaped structure, and the open side of the first case 11 is lidded with the second case 12, such that the first case 11 and the second case 12 jointly define the accommodating space 110. Alternatively, the first case 11 and the second case 12 may both be of a hollow structure with one side open (for example, as shown in FIG. 2), and the open side of the second case 12 is lidded with the open side of the first case 11. Certainly, the battery case 1 formed by the first case 11 and the second case 12 may be in various shapes, such as a cylinder or a rectangular parallelepiped.

In the battery 200, the plurality of battery cells 110 may be connected in series, in parallel, or in series-parallel. The series-parallel connection means that both series connection and parallel connection are present for the connection among the plurality of battery cells 110. The plurality of battery cells 110 may be directly connected in series, in parallel, or in series-parallel, and then the whole formed by the plurality of battery cells 110 is accommodated in the battery case 100. Alternatively, the battery 200 may also be in a form where the plurality of battery cells 110 are first connected in series, in parallel, or in series-parallel to give a battery module, and then a plurality of battery modules are connected in series, in parallel, or in series-parallel to form a whole and accommodated in the battery case 100. The battery 200 may further include other structures. For example, the battery 200 may further include a busbar for achieving the electrical connection between the plurality of battery cells 110.

Each battery cell 110 may be a secondary battery or a primary battery; it may also be a lithium-sulfur battery, a sodium-ion battery, or a magnesium-ion battery, but is not limited thereto. The battery cell 110 may be cylindrical, flat, rectangular parallelepiped-shaped, or in other shapes.

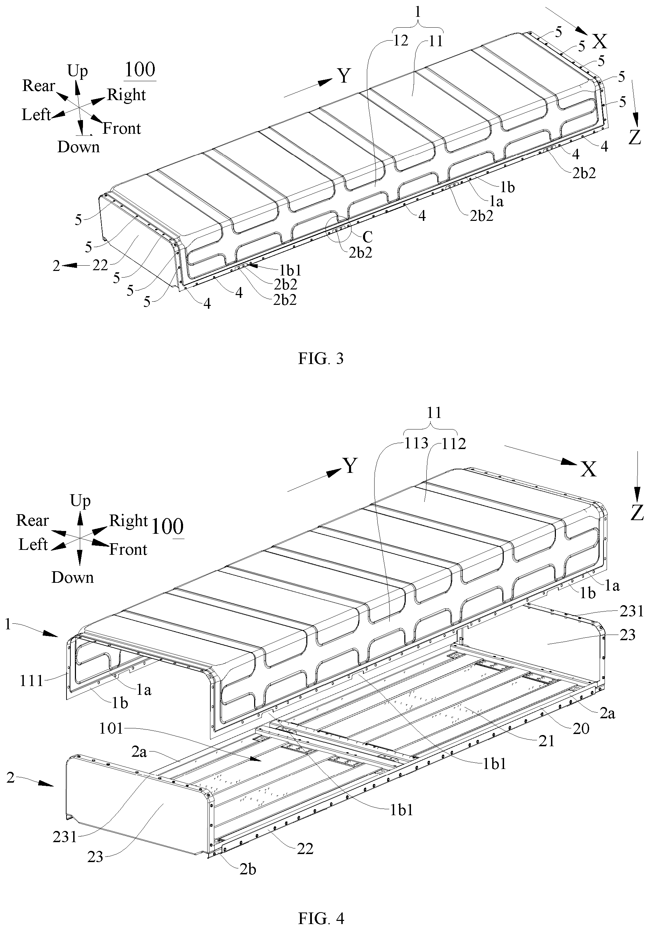

Referring to FIGs. 3, 4, and 7, in the embodiments of the present application, the battery case 100 includes: a first case 1 and a second case 2. The first case 1 and the second case 2 are body parts of the battery case 100, the second case 2 and the first case 1 are connected to each other to jointly define a sealed cavity 101 for accommodating battery cells 110, and the first case 1 and the second case 2 jointly protect the battery cells 110 arranged in the sealed cavity 101. The first case 1 includes a first sealing surface 10, the second case 2 includes a second sealing surface 20, and the first sealing surface 10 and the second sealing surface 20 cooperate with each other to form a sealing interface.

The battery case 100 further includes a first sealing member 3, and the first sealing member 3 is disposed at the sealing interface; that is, the first sealing member 3 is disposed between the first sealing surface 10 and the second sealing surface 20. The sealing performance of the battery case 100 is improved by providing the first sealing member 3 between the first sealing surface 10 and the second sealing surface 20 for a sealing fit. The first sealing member 3 may be a component having a sealing property and disposed between the first sealing surface 10 and the second sealing surface 20.

The battery case 100 further includes first fasteners 4. The first fasteners 4 pass through the first sealing surface 10 and the second sealing surface 20 to connect the first sealing surface and the second sealing surface, thereby fixedly connecting the first case 1 and the second case 2. In addition, the first fasteners 4 pass through the first sealing surface 10 and the second sealing surface 20 to further clamp the first sealing member 3, such that the first sealing surface 10 and the second sealing surface 20 are connected in a sealed manner, thereby improving the sealing performance of the battery case 100.

The first fasteners 4 are completely located outside the sealed cavity 101, and the sealed cavity 101 is not connected to the outside of the battery case 100 through the penetration of the first fasteners 4, which is conducive to improving the sealing performance of the battery case 100. In addition, in an extension direction of the sealing interface, the first fasteners 4 are located on a side, distal to the sealed cavity 101, of the first sealing member 3.

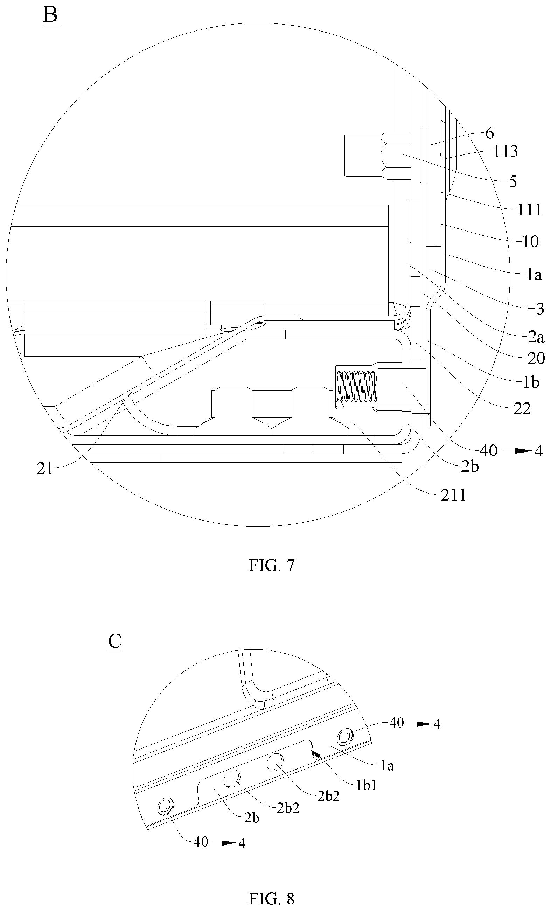

It should be noted that the sealing interface is provided to surround the sealed cavity 101 at least along a portion of the sealed cavity 101, and the sealing interface is further provided at an edge portion of the sealed cavity 101, so as to surround and define the sealed cavity 101. In a plane direction of the sealing interface, a direction toward a central portion of the sealed cavity is the extension direction of the sealing interface, and the first fasteners 4 are disposed distal to the sealed cavity 101 relative to the first sealing member 3. Illustratively, the sealing interface, extending in a vertical direction as shown in FIG. 7, is used as an example for description. The sealing interface is disposed adjacent to the bottom end of the sealed cavity 101, and the central portion of the sealed cavity 101 is located above the sealing interface, so the extension direction K is from bottom to top, and the first fastener 4 is located below the first sealing member 3.

In the embodiments of the present application, the first fastener 4 and the first sealing member 3 are arranged in a staggered manner. Compared with the design in which the fastener passes through the sealing member for sealing and fastening at the same time, in the present application, the first fastener 4 and the first sealing member 3 are arranged in a staggered manner, so that the first fastener 4 does not need to pass through the first sealing member 3. Therefore, it is unnecessary to provide holes for mounting the first fastener 4 at the first sealing member 3 and at the first sealing surface 10 and the second sealing surface 20 that clamp the first sealing member, thereby effectively alleviating the problem of sealing failure caused by the communication between the inside and the outside through gaps due to loosening, failure, or the like of individual first fasteners 4, and improving the sealing stability between the first case 1 and the second case 2. In addition, in the present application, it is unnecessary to provide holes for the first fastener 4 to pass through at the first sealing member 3 and at the first sealing surface 10 and the second sealing surface 20 that clamp the first sealing member, thereby alleviating the problem that gaps are likely to cause sealing failure of the battery case 100 when individual first fasteners 4 fail, and thus it is unnecessary to closely arrange the first fasteners 4 to increase the fastening force in order to reduce the influence of the gaps, thereby reducing the cost. In addition, by arranging the first fastener 4 and the first sealing member 3 in a staggered manner, the first fastener 4 does not need to pass through the first sealing member 3, such that the width of the first sealing member 3 is more freely selected, and it is unnecessary to make the width of the first sealing member 3 relatively large to alleviate the problem that openings are prone to cause sealing failure, which is conducive to appropriately reducing the width of the first sealing member 3, thereby reducing the cost.

When all the first fasteners 4 work normally, a plurality of first fasteners 4 connect and clamp the first sealing surface 10 and the second sealing surface 20 to fixedly connect the first case 1 and the second case 2. In addition, due to the function of the plurality of first fasteners 4, the first sealing surface 10 and the second sealing surface 20 are in a tight sealing fit by the first sealing member 3, and the battery case 100 seals and protects the internal sealed cavity 101.

When one first fastener 4 or a small number of first fasteners 4 fail, the remaining first fasteners 4 can still work normally to fixedly connect the first case 1 and the second case 2. Further, due to the separation of the portion serving the connecting function and the portion serving the sealing function, the first fastener 4 and the first sealing member 3 are arranged in a staggered manner. When only one or a small number of first fasteners 4 fail, the remaining first fasteners 4 work normally, and there will not be a great loss in the fastening force on the first sealing surface 10 and the second sealing surface 20 that clamp the first sealing member 3. The first fasteners 4 that work normally can still ensure a stable sealing fit between the first sealing surface 10 and the second sealing surface, thereby improving the sealing reliability of the battery case 100. In addition, since the first fastener 4 is not fixed on the first sealing member 3 in a penetrating manner, when one first fastener 4 fails, no gap communicating the inside and the outside will be generated on the first sealing member 3, which effectively alleviates the problem that gaps are likely to cause sealing failure when individual first fasteners 4 fail, and further improves the sealing reliability.

In the above technical solution, the first fastener 4 and the first sealing member 3 are arranged in a staggered manner, and the first fastener 4 provides a fastening connection effect, such that the first sealing surface 10 and the second sealing surface 20 clamp the first sealing member 3 to achieve a sealing fit. The first sealing member 3 is isolated between the sealed cavity 101 and the first fastener 4, thereby alleviating the problem of communication between the sealed cavity 101 and the outside through a gap where the first fastener 4 passes through, which is conducive to improving the sealing performance of the battery case 100. When one first fastener 4 or a small number of first fasteners 4 fail, the stable connection and sealing of the battery case 100 can still be maintained, thereby reducing the risk of sealing failure of the battery case 100 after the first fastener 4 fails, improving the sealing reliability of the battery case 100, and improving the operation safety of a battery using the battery case 100 of the present application.

Referring to FIGs. 3 and 4, the first case 1 is provided with a first matching portion 1a and a first connecting portion 1b adjacent to each other, and the second case 2 is provided with a second matching portion 2a and a second connecting portion 2b adjacent to each other; the first sealing member 3 is located between the first matching 1a portion and the second matching portion 2a, and the first fastener 4 is connected to the first connecting portion 1b and the second connecting portion 2b, such that the first matching portion 1a and the second matching portion 2a clamp the first sealing member 3.

At least portions of the first matching portion 1a and the first connecting portion 1b jointly form the first sealing surface 10, and at least portions of the second matching portion 2a and the second connecting portion 2b jointly form the second sealing surface 20. The first sealing member 3 is disposed between the first matching portion 1a and the second matching portion 2a, and the first fastener 4 is connected to the first connecting portion 1b and the second connecting portion 2b to pass through the first sealing surface 10 and the second sealing surface 20, such that the first matching portion 1a and the second matching portion 2a clamp the first sealing member 3.

The first sealing surface 10 is formed on a side, facing the second matching portion 2a, of the first matching portion 1a, and the second sealing surface 20 is formed on a side, facing the first matching portion 1a, of the second matching portion 2a, such that the first matching portion 1a and the second matching portion 2a are arranged opposite to each other to clamp the first sealing member 3.

In the above technical solution, the first matching portion 1a and the second matching portion 2a are configured for sealing fit, the first fastener 4 connects the first connecting portion 1b and the second connecting portion 2b, the first matching portion 1a, the second matching portion 2a, the first connecting portion 1b, and the second connecting portion 2b have clearly defined functions and clear structures, which is conducive to saving the manufacturing cost of the battery case 100.

Referring to FIGs. 3 and 4, in some embodiments of the present application, the second connecting portion 2b is provided with a plurality of connecting holes 2b1 spaced apart from each other, and the connecting holes 2b1 are provided for the first fasteners 4 to pass through; the second connecting portion 2b is further provided with hoisting holes 2b2, and at least one hoisting hole 2b2 is located between two adjacent connecting holes; the first connecting portion 1b is provided with clearance notches 1b1, and the number and positions of the clearance notches 1b1 correspond to the number and positions of the hoisting holes 2b2.

The first fastener 4 passes through the connecting hole 2b1 and is fastened and connected to the first connecting portion 1b. The second connecting portion 2b is provided with a plurality of connecting holes 2b1 spaced apart from each other, and correspondingly, a plurality of first fasteners 4 are also provided in one-to-one correspondence with the connecting holes 2b1. The first connecting portion 1b and the second connecting portion 2b are fastened and connected by arranging the plurality of first fasteners 4 spaced apart from each other, such that the forces on the first connecting portion 1b and the second connecting portion 2b can be made uniform. Therefore, the first sealing surface 10 and the second sealing surface 20 firmly clamp the first sealing member 3, thereby improving the sealing reliability of the battery case 100. Even if one first fastener 4 or a small number of first fasteners 4 fail, the stable connection and sealing of the battery case 100 can still be maintained, thereby reducing the risk of sealing failure of the battery case 100 after the first fastener 4 fails, improving the sealing reliability of the battery case 100, and improving the operation safety of a battery using the battery case 100 of the present application.

The second connecting portion 2b is further provided with hoisting holes 2b2. The hoisting holes 2b2 are configured to cooperate with a hoisting tool to lock the hoisting tool with the battery case 100. The hoisting tool is configured to move the battery case 100, which facilitates the transportation and displacement of the battery case 100. By providing clearance notches 1b1 on the first connecting portion 1b, referring to FIG. 8, the clearance notches 1b1 provide clearance for the hoisting ports 2b2, which alleviates the interference of the first case 1 with the cooperation between the hoisting tool and the hoisting holes 2b2, and improves the stability of the hoisting operation.

The hoisting holes 2b2 are provided on the second connecting portion 2b, and the hoisting holes 2b2 are separated from the first connecting portion 1a and the second connecting portion 2a that are configured for clamping the first sealing member 3 for sealing. This can reduce the risk of sealing failure of the battery case 100 caused by deformation of the hoisting holes 2b2 under force during the hoisting process of the battery case 100, thereby improving the sealing reliability of the battery case 100, and improving the operation safety of a battery using the battery case 100 of the present application.

In the above technical solution, the hoisting holes 2b2 are provided on the second connecting portion 2b, and the hoisting holes 2b2 are separated from the first connecting portion 1a and the second connecting portion 2a that are configured for clamping the first sealing member 3 for sealing. This can reduce the risk of sealing failure of the battery case 100 caused by deformation of the hoisting holes 2b2 under force during the hoisting process of the battery case 100, thereby improving the sealing reliability of the battery case 100, and improving the operation safety of a battery using the battery case 100 of the present application.

Referring to FIG. 3, in some embodiments of the present application, a plurality of hoisting holes 2b2 are provided and spaced apart from each other along the second connecting portion 2b. During the hoisting operation, the battery case 100 is subjected to a uniform force, which can improve the safety of the battery case 100.

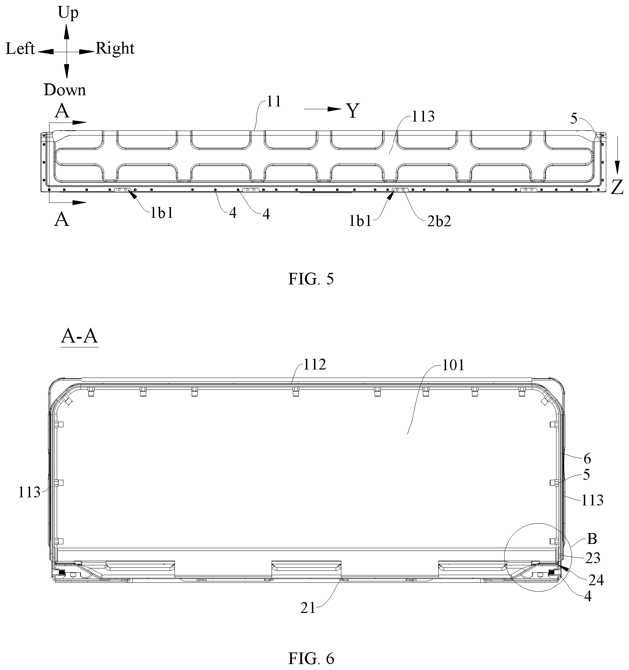

In some embodiments, referring to FIG. 5, the connecting holes 2b1 adjacent to the hoisting holes 2b2 are arranged more densely, and improving the connection tightness of the first connecting portion 1b and the second connecting portion 2b at the hoisting holes 2b2 can reduce the risk of sealing failure of the battery case 100 caused by deformation of the hoisting holes 2b2 under force during the hoisting process of the battery case 100, thereby improving the sealing reliability of the battery case 100, and improving the operation safety of a battery using the battery case 100 of the present application.

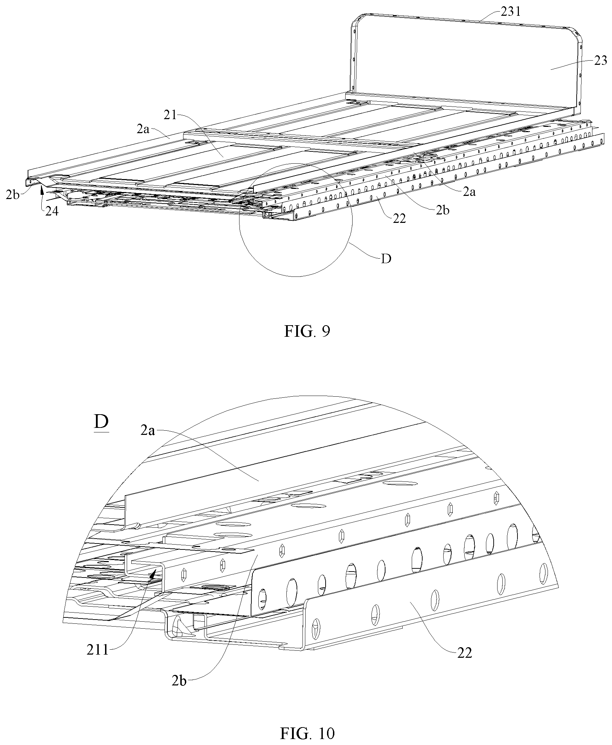

Referring to FIGs. 4 and 10, in some embodiments of the present application, the second case 2 includes a bearing plate 21 and two second connecting portions 2b arranged opposite to each other in a first direction X, and the second connecting portions 2b are configured as side surfaces, perpendicular to the first direction X, of the bearing plate 21.

Correspondingly, referring to FIG. 4, two first connecting portions 1b are also provided and arranged opposite to each other in the first direction X. The first fastener 4 passes through the first connecting portion 1b and the second connecting portion 2b to enable the first matching portion 1a and the second matching portion 2a to clamp the first sealing member 3. The second connecting portion 2b is configured on a side surface of the bearing plate 21, which facilitates the connection between the second connecting portion 2b and the first connecting portion 1b, thereby improving the assembly efficiency of the battery case 100.

It should be noted that the bearing plate 21 is not in a flat plate shape, but is a plate-shaped member with certain structural features in a thickness direction. The second connecting portion 2b is provided at least on a side surface of the bearing plate 21 perpendicular to the first direction X. A length direction of the bearing plate 21 extends in a second direction Y, a width direction of the bearing plate 21 is the first direction X, and second connecting portions 2b are respectively provided on two sides of the first direction X.

The two second connecting portions 2b are spaced apart from each other in the first direction X. A length direction of the second connecting portion 2b extends in the second direction Y, and a width direction of the second connecting portion 2b extends in a third direction Z; every two of the first direction X, the second direction Y, and the third direction Z are orthogonal.

The second connecting portion 2b is provided with a plurality of connecting holes 2b1 spaced apart from each other in the length direction of the second connecting portion 2b to stably connect the second connecting portion 2b and the first connecting portion 1b; that is, the plurality of connecting holes 2b1 are spaced apart from each other in the second direction.

In the above technical solution, the second connecting portion 2b is configured on the side surface of the bearing plate 21, which facilitates the connection between the second connecting portion 2b and the first connecting portion 1b, thereby improving the assembly efficiency of the battery case 100.

Referring to FIGs. 4 and 10, in some embodiments of the present application, two sides of the bearing plate 21 in the first direction are formed as bent structures, and cavities 211 are formed inside the two sides of the bearing plate 21 in the first direction. In addition, compared with a flat plate-shaped structure, designing the bearing plate 21 as a structure with the cavities 211 can improve the structural strength of the second case 2 and improve the impact resistance, thereby improving the operation safety of a battery using the battery case 100 of the present application.

Illustratively, referring to FIGs. 7 and 10, the two sides of the bearing plate 21 in the first direction are formed as 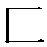 -shaped structures with cavities 211. That is, a cavity 211 is formed on an inner side of the second connecting portion 2b. When the first fastener 4 passes through the connecting hole 2b1, a portion of the first fastener 4 extends into the cavity 211, and the first fastener 4 passes through the second connecting portion 2b to be fixedly connected with the first connecting portion 2b. By providing the cavity 211 to facilitate the penetration of the first fastener 4, the connection stability between the first case 1 and the second case can be improved.

Referring to FIGs. 3, 5, and 7, in some embodiments of the present application, the first fastener 4 is a rivet nut 40.

In the above technical solution, the first connecting portion 1b and the second connecting portion 3b are fixedly connected by the rivet nut 40. Compared with a common bolt connection, the mounting hole of the rivet nut 40 does not need to be tapped for an internal thread, nor does it require a nut to be welded, which is convenient to use and can improve the mounting efficiency. In addition, the riveting of the rivet nut 40 is firm, and the connection stability is high.

In some embodiments of the present application, referring to FIG. 7, a portion of the rivet nut 40 extends into the cavity 211 on the inner side of the second connecting portion 2b. The rivet nut 40 clamps the first connecting portion 1b and the second connecting portion 2b to fixedly connect the first case 1 and the second case, and enables the first matching portion 1a and the second matching portion 1b to clamp the first sealing member 3 to seal and protect the sealed cavity 101.

Referring to FIGs. 4 and 10, in some embodiments of the present application, the second case 2 further includes two extension plates 22; the two extension plates 22 are arranged opposite to each other in the first direction X and are both connected to the bearing plate 21, and two second matching portions 2a are provided and are respectively formed on the two extension plates 22.

Correspondingly, referring to FIG. 4, two first matching portions 1a are also provided and arranged opposite to each other in the first direction X, and the first matching portions 1a and the second matching portions 2a are arranged opposite to each other to clamp the first sealing member 3.

The second matching portion 2a is arranged adjacent to the second connecting portion 2b, such that after the first fastener 4 fixedly connects the first connecting portion 1b and the second connecting portion 2b, the second matching portion 2a and the first matching portion 2b clamp the first sealing member 3 to seal and protect the sealed cavity 101.

In the above technical solution, the second matching portion 2a is disposed adjacent to the second connecting portion 2b, such that the clamping effect of the first fastener 4 on the first matching portion 1a and the second matching portion 2a can be improved, which is conducive to improving the sealing performance of the battery case 100.

Referring to FIG. 7, in some embodiments of the present application, the first fastener 4 further passes through the extension plate 22 to connect the first connecting portion 1b, the second connecting portion 2b, and the extension plate 22. Referring to FIG. 10, the extension plate 22 is also provided with a via for the first fastener 4 to pass through, and the first fastener 4 passes through the via to fixedly connect the extension plate 22. Compared with connecting the extension plate 22 to the bearing plate 21 by means of bonding, welding, or the like, the extension plate 22 is directly fixedly connected to the bearing plate 21 by using the first fastener 4 for connecting the bearing plate 21 and the first connecting portion 1b, such that the assembly steps of the battery case 100 can be reduced, the manufacturing cost can be lowered, and the assembly efficiency can be improved.

In the above technical solution, the extension plate 22 is fixedly connected to the bearing plate 21 by using the first fastener 4 for connecting the bearing plate 21 and the first connecting portion 1b, such that the assembly process of separately connecting the extension plate 21 and the first connecting portion 1b to the bearing plate 21 can be reduced, thereby lowering the manufacturing cost of the battery case 100 and improving the assembly efficiency of the battery case 100.

Referring to FIG. 4, in some embodiments of the present application, the second case 2 further includes two extension walls 23 arranged opposite to each other in the second direction Y, the second direction Y intersecting with the first direction X. The first case 1 includes a top plate 11 arranged opposite to the bearing plate 21; a surface, facing away from the bearing plate 21, of the extension wall 23 is a third sealing surface 231, and a surface, facing the extension wall, of the top plate 11 is a fourth sealing surface 111; a second sealing member 6 is clamped between the third sealing surface 231 and the fourth sealing surface 111.

The first sealing member 3 is clamped between the first sealing surface 10 and the second sealing surface 20, and the second sealing member 6 is clamped between the third sealing member 231 and the fourth sealing member 111. The sealing fit between the first sealing surface 10 and the second sealing surface 20, and the sealing fit between the third sealing surface 231 and the fourth sealing surface 111, completely surround the sealed cavity 101, such that the sealing reliability of the sealed cavity 101 can be improved.

In the above technical solution, the sealing fit between the first sealing surface 10 and the second sealing surface 20, and the sealing fit between the third sealing surface 231 and the fourth sealing surface 111, completely surround the sealed cavity 101, such that the sealing reliability of the sealed cavity 101 can be improved.

In some embodiments of the present application, the battery case 100 further includes a second fastener 5. The second fastener 5 passes through the fourth sealing surface 111, the second sealing member 6, and the third sealing surface 231 in sequence and is locked to the extension wall 23. The second fastener 5 is completely located outside the sealed cavity 101.

The second fastener 5 is completely located outside the sealed cavity 101, and the sealed cavity 101 is not connected to the outside of the battery case 100 through the penetration of the second fastener 5, which is conducive to improving the sealing performance of the battery case 100.

In the above technical solution, the second fastener 5 passes through the second sealing member 6 to fixedly connect the fourth sealing member 111 and the third sealing member 231, the fourth sealing surface 11 and the third sealing surface 231 are simultaneously brought into a sealing fit, which can save the arrangement area that would otherwise be required for arranging the second sealing member 6 and the second fastener 5 in a staggered manner, reduce the space occupied in the battery case 100, and is conducive to the miniaturization design of the battery case 100. In addition, the second fastener 5 is completely located outside the sealed cavity 101, and the sealed cavity 101 is not connected to the outside of the battery case 100 through the penetration of the second fastener 5, which is conducive to improving the sealing performance of the battery case 100.

Referring to FIG. 4, the second case 2 includes a bearing plate 21 and two extension walls 23 arranged opposite to each other in the second direction Y; correspondingly, the first case 1 includes a top plate 11, and the top plate 11 includes a first plate portion 112 and two second plate portions 113 arranged opposite to each other in the first direction X.

The first sealing surface 10 is formed at an end, distal to the first plate portion 112, of the second plate portion 113, and two first matching portions 1a and two second connecting portions 1b are provided and extend in the second direction Y. The two sides of the bearing plate 21 in the first direction X are configured as second connecting portions 2b, and two second connecting portions 2b are provided and extend in the second direction Y. The extension plate 22 is connected to the bearing plate 21, the second matching portion 2a is formed on the extension plate 22, and two second matching portions 2b are provided and extend in the second direction X.

The first connecting portion 1b and the second connecting portion 2b are fixedly connected by the first fastener 4, and the first matching portion 2a and the second matching portion 2b clamp the first sealing member 3 to provide sealing fit for the two pairs of side portions, extending in the second direction Y, of the first case 1 and the second case 2.

The surface, facing away from the bearing plate 21, of the extension wall 23 is the third sealing surface 231. It should be noted that the third sealing surface 231 is disposed to face away from the bearing plate 21, and the term "face away from" should be interpreted in a broad sense, meaning that as long as it is not directly connected to the bearing plate 21, it may be understood as being disposed to face away from the bearing plate 21.

Each extension wall 23 includes one third sealing surface 231 extending in the first direction X and two third sealing surfaces 231 extending in the third direction Z. Each second plate portion 113 includes two fourth sealing surfaces 111 extending in the third direction Z, and the first plate portion 112 further includes two fourth sealing surfaces 111 extending in the first direction X.

The second sealing member 6 is clamped between the third sealing surface 231 and the fourth sealing surface 111, and the second fastener 5 passes through the fourth sealing surface 111, the second sealing member 6, and the third sealing surface 231 in sequence and is locked to the extension wall 23, so as to provide sealing fit for the two pairs of side portions, extending in the first direction X, of the first case 1 and the second case 2, as well as the four pairs of side portions, extending in the third direction Z, of the first case and the second case.

In some embodiments of the present application, the first sealing member 3 and the second sealing member 6 are integrally formed into a ring shape, and the first sealing member 3 and the second sealing member 6 have strong integrity, which can improve the sealing effect on the sealed cavity 101. Compared with connecting the first sealing member 3 and the second sealing member 6 separately, the integral formation can alleviate the problem that the sealed cavity 101 communicates with the outside through the gap at the connection end of the first sealing member 3 and the second sealing member 6, and is conducive to improving the sealing performance of the battery case 100.

In the above technical solution, the first sealing member 3 and the second sealing member 6 have strong integrity, which can alleviate the problem that the sealed cavity 101 communicates with the outside through the gap at the connection end of the first sealing member 3 and the second sealing member 6, and is conducive to improving the sealing performance of the battery case 100.

In some embodiments of the present application, the extension wall 22 is connected to the bearing plate 21 by full welding.

In the above technical solution, the extension wall 22 is connected to the bearing plate 21 by full welding, which can improve the structural strength of the second case 2, and improve the operation safety of the battery case.

In a second aspect, the embodiments of the present application provide a battery 200. The battery includes a battery cell 110 and the above battery case 100100, and the battery cell 110 is accommodated in the sealed cavity 101.

In the above technical solution, since the above battery case 100100 is adopted for the battery 200, the sealing reliability of the battery 200 can be improved, thereby improving the operation reliability and use safety of the battery 200.

In a third aspect, the embodiments of the present application provide an electric device 1000. The electric device includes the above battery 200, and the battery 200 is configured to provide electric energy.

In the above technical solution, since the above battery 200 is adopted for the electric device 1000, the use reliability and safety of the electric device 1000 can be effectively improved.

Referring to FIGs. 3 to 10 again, the battery case 100 according to specific embodiments of the present application is described.

In the embodiments of the present application, the battery case 100 includes: a first case 1, a second case 2, a first sealing member 3, and a first fastener 4. The battery case 100 is a rectangular parallelepiped, and the first case 1 is located above the second case 2. The first case 1 includes a first plate portion 112, which is located at the top and extends in the horizontal direction, and the first case 1 further includes two second plate portions 113 spaced apart from each other in the front-rear direction. The length of each second plate portion 113 extends in the left-right direction, and the first plate portion 112 is connected to the second plate portions 113 in a bent manner.

The second case 2 includes a bearing plate 21 which is located at the bottom and extends in the horizontal direction, and the second case 2 further includes two extension walls 23 spaced apart from each other in the left-right direction. The length of each extension wall 23 extends in the front-rear direction, and the bearing plate 21 is connected to the extension walls 23 in a bent manner.

A first connecting portion 1b and a first matching portion 1a are formed at the lower end of the second plate portion 113, and a second matching portion 2a and a second connecting portion 2b are formed on the front and rear sides of the bearing plate 21. The first connecting portion 1b and the second connecting portion 2b are fixedly connected by the first fastener 4, and the first matching portion 2a and the second matching portion 2b clamp the first sealing member 3 to provide sealing fit for the two pairs of side portions, extending in the left-right direction, of the first case 1 and the second case 2.

Fourth sealing surfaces 111 are provided at left and right ends of the first plate portion 112, and four fourth sealing surfaces, extending in the up-and-down direction, are further provided on the second plate portion 113. Third sealing panels 231 are provided at the left and right ends on the upper side of the extension wall 13, and the extension wall 13 further includes four third sealing surfaces 231 extending in the up-and-down direction. A second sealing member 6 is clamped between the third sealing surface 231 and the fourth sealing surface 111, and the second fastener 5 passes through the fourth sealing surface 111, the second sealing member 6, and the third sealing surface 231 in sequence and is locked to the extension wall 23, so as to provide sealing fit for the two pairs of side portions, extending in the front-rear direction, of the first case 1 and the second case 2, as well as the two pairs of side portions, extending in the up-and-down direction, of the first case 1 and the second case 2.

The second connecting portion 3b is further provided with hoisting holes 2b2, and the hoisting holes 2b2 are separated from the first matching portion 1a and the second matching portion 2a that are configured for sealing, which can reduce the risk of sealing failure of the battery case 100 caused by deformation of the hoisting holes 2b2 under force during the hoisting process of the battery case 100, thereby improving the sealing reliability of the battery case 100, and improving the operation safety of a battery using the battery case 100 of the present application. When one first fastener 4 or a small number of first fasteners 4 fail, the stable connection and sealing of the battery case 100 can still be maintained, thereby reducing the risk of sealing failure of the battery case 100 after the first fastener 4 fails, and improving the operation safety of a battery using the battery case 100 of the present application.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery case, comprising:
a first case and a second case, connected in a sealed manner to form a sealed cavity, wherein the first case comprises a first sealing surface, and the second case comprises a second sealing surface, the first sealing surface cooperating with the second sealing surface to form a sealing interface;
a first sealing member, disposed at the sealing interface to seal the first sealing surface and the second sealing surface; and
first fasteners, wherein the first fasteners pass through the first sealing surface and the second sealing surface to connect the first sealing surface and the second sealing surface to clamp the first sealing member, such that the first sealing surface and the second sealing surface are connected in a sealed manner; and
the first fasteners are completely located outside the sealed cavity, and in an extension direction of the sealing interface, the first fasteners are located on a side, distal to the sealed cavity, of the first sealing member.

2. The battery case according to claim 1, wherein the first case is provided with a first matching portion and a first connecting portion adjacent to each other, and the second case is provided with a second matching portion and a second connecting portion adjacent to each other; the first sealing member is located between the first matching portion and the second matching portion, and the first fasteners are connected to the first connecting portion and the second connecting portion, such that the first matching portion and the second matching portion clamp the first sealing member.

3. The battery case according to claim 2, wherein the second connecting portion is provided with a plurality of connecting holes spaced apart from each other, and the connecting holes are provided for the first fasteners to pass through; the second connecting portion is further provided with hoisting holes, and at least one of the hoisting holes is located between two adjacent connecting holes; the first connecting portion is provided with clearance notches, and a number and positions of the clearance notches correspond to a number and positions of the hoisting holes.

4. The battery case according to claim 2 or 3, wherein the second case comprises two second connecting portions arranged opposite to each other in a first direction and a bearing plate, and the second connecting portions are configured as side surfaces, perpendicular to the first direction, of the bearing plate.

5. The battery case according to claim 4, wherein the second case further comprises two extension plates, the two extension plates are arranged opposite to each other in the first direction and are both connected to the bearing plate, and two second matching portions are provided and are respectively formed on the two extension plates.

6. The battery case according to claim 5, wherein the first fastener further passes through the extension plate to connect the first connecting portion, the second connecting portion, and the extension plate.

7. The battery case according to claim 5 or 6, wherein the second case further comprises two extension walls arranged opposite to each other in a second direction, the second direction intersecting with the first direction, and the first case comprises a top plate arranged opposite to the bearing plate; a surface, facing away from the bearing plate, of the extension wall is a third sealing surface, and a surface, facing the extension wall, of the top plate is a fourth sealing surface; a second sealing member is clamped between the third sealing surface and the fourth sealing surface.

8. The battery case according to claim 7, wherein the battery case further comprises a second fastener; the second fastener passes through the fourth sealing surface, the second sealing member, and the third sealing surface in sequence and is locked to the extension wall, and the second fastener is completely located outside the sealed cavity.

9. The battery case according to claim 7 or 8, wherein the first sealing member and the second sealing member are integrally formed into a ring shape.

10. The battery case according to any one of claims 7 to 9, wherein the extension wall is connected to the bearing plate by full welding.

11. A battery, comprising a battery cell and the battery case according to any one of claims 1 to 10, wherein the battery cell is disposed in the sealed cavity.

12. An electric device, comprising the battery according to claim 11, wherein the battery is configured to provide electric energy.
